# FASCICULE DE BREVET EUROPEEN

(11) **EP 1 904 777 B1**
(45) Date de publication et mention de la délivrance du brevet: **01.01.2014**
(21) Numéro de dépôt: 06778702.8
(22) Date de dépôt: 28.06.2006
(51) Int. Cl.: F16L 1/20

(54) **DISPOSITIF ET PROCÉDÉ DE RÉGULATION DU FLAMBEMENT DES CONDUITES RIGIDES SOUS-MARINES**
VORRICHTUNG UND VERFAHREN ZUR REGULIERUNG DES KNICKENS VON STARREN UNTERWASSERROHREN
DEVICE AND METHOD FOR REGULATING BUCKLING OF RIGID SUBMARINE PIPES

(30) Priorité: 13.07.2005 FR 0507518
(43) Date de publication de la demande: 02.04.2008
(73) Titulaire: Technip France, 92400 Courbevoie (FR)
(72) Inventeur: DUROCH, Jean-François, F-75012 Paris (FR); ROUTEAU, Sylvain, F-92210 Saint Cloud (FR)
(74) Mandataire: Bertrand, Didier
(86) Numéro de dépôt international: PCT/FR2006/001509
(87) Numéro de publication internationale: WO 2007/010102

(56) Documents cités:
- FR-A1- 2 333 185
- US-A- 3 955 599
- US-A- 4 253 779
- US-A- 4 315 702

## Description

L'invention concerne un dispositif et un procédé de régulation (contrôle) du flambement d'une conduite rigide sous-marine, notamment pour le transport de fluides tels que des hydrocarbures, du type conduite simple rigide ou conduite à enveloppe double (« pipe-in-pipe ») avec ou sans isolation thermique.

Le problème à résoudre est celui du flambement (« buckling ») des conduites rigides d'hydrocarbures, sous l'effet des contraintes axiales de compression résultant de l'effet conjugué de la température et de la pression du fluide circulant dans la conduite, et de la pression hydrostatique.

Passé un certain seuil, ces contraintes peuvent provoquer le flambement de la conduite rigide.

On distingue généralement deux types de flambement :
- un flambement vertical (« upheaval buckling ») : la conduite se décolle du sol et flambe vers le haut.
- un flambement latéral (« lateral buckling ») : la conduite reste au sol et flambe sur les côtés.

Il convient d'éviter l'endommagement par flambement d'une conduite rigide devant subir de fortes variations de température et de pression. Il convient aussi d'éviter que le flambement ou l'expansion axiale de la conduite ne conduise à un endommagement des équipements connectés aux extrémités de cette dernière, tels que par exemple des collecteurs (« manifolds », en anglais) ou franchissements (« crossings »)

On connaît des dispositifs destinés à stopper la propagation d'un flambement le long d'une conduite sous-marine, ledit flambement pouvant être initié pendant la pose de la conduite, du fait de contraintes excessives au niveau du tronçon de conduite en chaînette reliant le fond marin au navire de pose. Les documents US 4300598, US 3860039, GB 1564621, US 5458441 et EP 0100099 décrivent de tels dispositifs. Ces dispositifs ne répondent pas au problème posé.

Une solution connue consiste à enfouir la conduite dans une tranchée creusée dans le sol. Le flambement latéral est ainsi rendu impossible, puisque la conduite est bloquée sur ses deux côtés par la tranchée. Le flambement vertical reste possible mais il peut être évité si le poids des gravats est suffisant. Cette solution est également peu économique et de surcroît difficile à mettre en oeuvre en mer profonde (1000 m et plus).

Une autre solution consiste à utiliser des éléments d'expansion (raccords de canalisation flexibles dits « jumpers ») disposés le long de la conduite et destinés à reprendre les contraintes axiales.

Le document GB 2287297 décrit une solution consistant à déformer volontairement la conduite lors de la pose de façon à créer des petites courbures alternées et régulières (en forme de vagues) tout le long de la conduite. Ainsi, la conduite offre une moindre résistance à la flexion et aux petits déplacements latéraux, ce qui permet aux contraintes de compression de se libérer de façon homogène, tout le long de la conduite, et d'éviter les flambements et concentrations de contraintes. Cette solution est coûteuse également compte tenu de la déformation sous forme de vague qui doit être menée sur le navire de pose à l'aide d'outillages spécifiques.

D'autres solutions visant à contrôler (réguler) le flambement pour faire en sorte que ses effets soient acceptables, ont fait l'objet de conférences relatées dans des publications :
*OTC (Offshore Technology Conference) 2003 - King Flowlines-Thermal Expansion Design and Implementation.*
*OMAE (Offshore Mechanics and Arctic Engineering Conference) 1989 - Thermal buckling of pipelines close to restraints*

L'idée de base commune à ces solutions est de répartir judicieusement plusieurs zones de flambement latéral le long de la conduite, de façon à libérer efficacement les contraintes axiales de compression, tout en faisant en sorte que ces flambements restent acceptables. En pratique, ces solutions font appel à divers dispositifs initiateurs de flambement latéral installés en permanence au niveau des emplacements souhaités. Les flambements s'initiant plus facilement dans les courbes que dans les sections droites, il a été imaginé de courber volontairement la conduite dans les zones où l'on souhaite que se développent les flambements.

Une autre solution consiste à réduire localement le poids de la conduite en utilisant des bouées laissées à demeure : les bouées peuvent être sous forme de colliers (« clamps ») installés pendant la pose. Ces bouées réduisent le poids apparent de la conduite et donc la friction latérale avec le sol. De plus, l'augmentation de diamètre au niveau des bouées crée une discontinuité de l'inertie en flexion qui, à elle seule, favorise le flambement.

Une autre solution connue visant à initier un flambement latéral en réduisant la friction latérale entre la conduite et le sol consiste à placer entre le fond marin et la conduite des travées ou traverses transversales de glissement sur lesquelles la conduite peut aisément glisser latéralement.

Ces travées sont généralement réalisées avec des tubes métalliques de gros diamètre. La réduction de la friction latérale découle d'une part du décollement du pipeline au niveau de son croisement avec la travée (absence de contact avec le sol), et d'autre part du faible coefficient de frottement entre la conduite et la travée.

Ces solutions visant à initier et à contrôler les flambements latéraux ne répondent pas de façon satisfaisante au problème posé. D'une part, l'initiation des flambements n'est pas totalement fiable. D'autre part, ces solutions ne permettent pas de contrôler la forme - le mode - et l'amplitude du flambement et par conséquent les contraintes mécaniques dans la conduite. Enfin, elles ne permettent pas de garantir la reproductibilité des flambements, tant au niveau de leur forme que de leur position, au cours des cycles de température et de pressions appliqués à la conduite.

Finalement, malgré un grand nombre de solutions proposées, on s'aperçoit que le problème se pose toujours de pouvoir efficacement réguler le flambement d'une conduite posée sur un fond marin.

Le document US 3 466 881 fait connaître des larges colliers guidant et limitant les débattements horizontaux et verticaux d'une conduite passant dans ces colliers.

Le document US 3 955 599 fait connaître un dispositif imposant une courbure localisée à une conduite.

Le document WO03 012327 fait connaître un dispositif pour limiter la courbure d'une conduite flexible.

Aucun de ces trois documents ne vise la régulation du flambement d'une conduite rigide.

Les documents US 4 253 779 et US 4 315 702 concernent l'aboutement de demi-conduites, mais pas la régulation du flambement latéral.

La présente invention a pour but de proposer une solution à la fois simple et économique permettant de réguler le flambement latéral de manière efficace, de façon à assurer l'intégrité de la conduite et des équipements connectés aux extrémités de cette dernière.

L'invention atteint son but grâce à une installation présentant les caractéristiques de la revendication 1 annexée.

Avantageusement, la force appliquée est sensiblement perpendiculaire à l'axe de ladite conduite. Dans un mode de réalisation, la force appliquée est sensiblement horizontale. La force appliquée est une force constante prédéterminée ou prédéterminable contrairement à, par exemple, une force subie plus que choisie qui ne résulterait que de courants marins variables et non prédictibles.

L'invention constitue de fait également un accumulateur d'expansion permettant, grâce à la régulation du flambement, de détourner efficacement l'expansion axiale de la conduite en expansion latérale, ce qui a pour effet de limiter les déplacements et les charges imposées en extrémité de conduite.

Selon le mode de flambement qu'on veut privilégier, le dispositif de l'invention peut comprendre un seul dispositif d'application de force, ou bien dans la version préférée de l'invention deux dispositifs d'application de force disposés à une distance déterminée l'un de l'autre le long de la section de conduite, à savoir un premier dispositif d'application d'une première force ayant une première composante horizontale perpendiculaire à l'axe de ladite conduite au niveau dudit point d'application de ladite première force, et un deuxième dispositif d'application d'une deuxième force ayant une deuxième composante horizontale perpendiculaire à l'axe de ladite conduite au niveau dudit point d'application de ladite deuxième force, lesdites première et deuxième composantes étant sensiblement parallèles et de sens opposé.

Avantageusement, la première et la seconde composante ont des intensités sensiblement égales.

Avantageusement, la distance déterminée est comprise entre 30 m et 200 m.

Avantageusement, l'intensité de la composante horizontale perpendiculaire à l'axe de la conduite de chaque force appliquée est comprise entre 300 et 7000 daN.

Selon un mode de réalisation particulier de l'invention, le dispositif d'application de force comporte un collier, avantageusement en deux parties, entourant la conduite pour fixer une extrémité d'un élément linéaire de traction latérale. De préférence, le collier est monté libre en rotation sur la conduite. L'autre extrémité de l'élément linéaire de traction latérale est liée à un actionneur de type bouée, masse ou treuil motorisé. L'élément linéaire, câble ou chaîne, passe sur au moins un élément de renvoi, de type poulie ou déflecteur, selon la conception retenue.

En alternative, le dispositif d'application de force peut comprendre un actionneur de type vérin ou ressort.

Il est avantageux de prévoir dans la section de conduite où l'invention est mise en oeuvre des dispositifs destinés à faciliter le glissement latéral de la conduite en réduisant la friction avec le fond marin, par exemple en prévoyant dans la section des bouées fixes d'allègement de la conduite ou au moins une travée de glissement latéral de la conduite.

Par dispositif selon l'invention, on entend l'ensemble des moyens matériels qui, en combinaison à une conduite, permettent d'en réguler le flambement.

L'invention concerne aussi un procédé pour réguler le flambement latéral d'une section de conduite rigide sous-marine de transport de fluide installée sur un fond marin tel que défini dans la revendication 15 annexée.

Les avantages principaux de la présente invention, par rapport à l'art antérieur, sont la possibilité de contrôler précisément la localisation (c'est-à-dire d'éviter que le flambement ne se propage le long de la conduite) et le mode de flambement.

D'autres caractéristiques et avantages de l'invention apparaîtront à la lecture de la description suivante, en référence aux dessins annexés sur lesquels :
- la figure 1A est une vue schématique perspective d'une section de conduite selon le premier mode d'application d'une force ayant une composante horizontale perpendiculaire à l'axe de la conduite.
- la figure 1B est une vue en plan d'une section de conduite selon trois modes différents d'application de force horizontale perpendiculaire à l'axe de la conduite.
- la figure 2 est une vue schématique perspective d'une conduite avec un dispositif de régulation de flambement latéral en mode 2.
- la figure 3 est une vue schématique en coupe horizontale de la conduite au niveau d'un collier tournant de fixation du câble horizontal d'application de force.
- la figure 4 est une vue en plan d'une section de conduite équipée, en variante, une combinaison de bouées et de colliers de fixation du câble applicateur de force.
- les figures 5A et 5B représentent respectivement de profil et en plan une autre combinaison de semelles de glissement et de colliers de fixation du câble applicateur de force.
- les figures 6A et 6B sont des vues schématiques transversales de deux variantes de réalisation d'un dispositif d'application d'une force ayant une composante horizontale perpendiculaire à l'axe de la conduite.

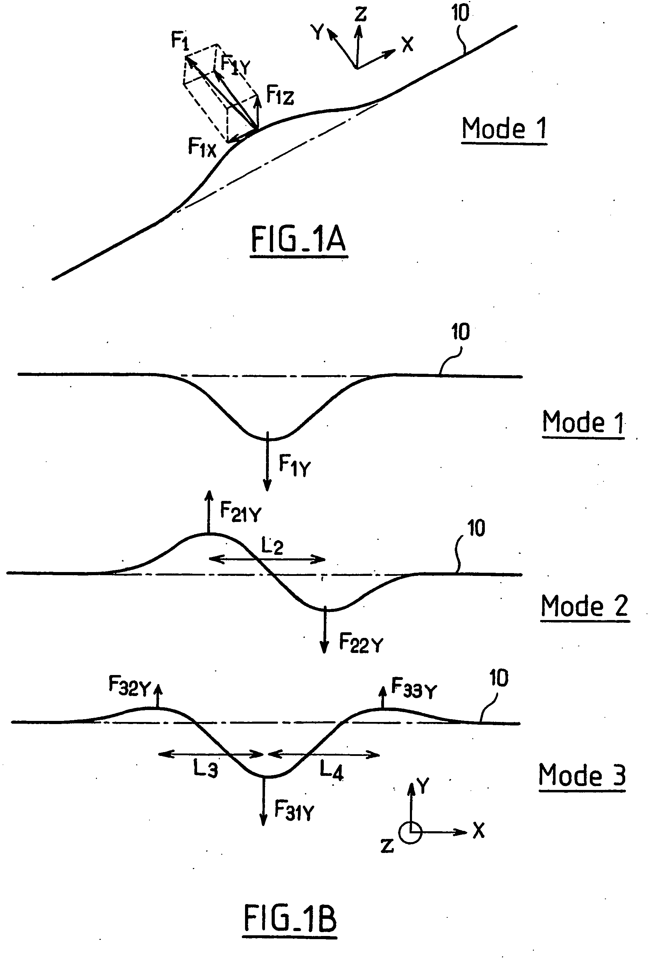

La figure 1A montre une section de conduite 10 flambant latéralement sous l'influence d'une force F₁ appliquée de façon permanente conformément à l'invention. Cette force se décompose selon le repère XYZ en trois composantes perpendiculaires F_{1X}, F_{1Y} et F_{1Z}.

La composante horizontale perpendiculaire à l'axe de la conduite, F_{1Y}, est la composante essentielle pour la mise en oeuvre de l'invention. Contre toute attente, l'application permanente de cette composante F_{1Y} permet d'initier et de contrôler efficacement le flambement latéral de la conduite 10.

La composante verticale F_{1Z} n'est pas nécessaire pour la mise en oeuvre de l'invention, mais peut avoir un effet avantageux. En effet, si cette composante est appliquée dans le sens montant, l'effet obtenu est équivalent à une réduction locale du poids de la conduite 10, ce qui produit une réduction locale des forces de frottement entre la dite conduite et le fond marin et par conséquent facilite l'initiation et le contrôle du flambement latéral.

La composante horizontale parallèle à l'axe de la conduite, F_{1X}, est inutile pour la mise en oeuvre de cette invention. Par souci d'efficacité, il est préférable, mais pas absolument nécessaire, que cette composante F_{1X} ait une intensité faible. Selon un mode avantageux de l'invention, la composante F_{1X} a une intensité inférieure à celle de la composante F_{1Y}, préférablement inférieure à la moitié de celle de la composante F_{1Y}, préférablement inférieure au quart de celle de la composante F_{1Y}, préférablement inférieure au dixième de celle de la composante F_{1Y}, préférablement inférieure au cinquantième de celle de la composante F_{1Y}.

Selon un mode avantageux, la force appliquée F₁ est sensiblement perpendiculaire à l'axe de la conduite 10 au niveau du point d'application. Selon un autre mode avantageux, la force appliquée F₁ est sensiblement horizontale. Selon un mode particulièrement avantageux, la force appliquée F₁ est à la fois horizontale et sensiblement perpendiculaire à l'axe de la conduite 10 au niveau du point d'application.

La figure 1B montre une section de conduite 10 flambant de manière privilégiée dans un des trois premiers modes de flambement sous l'influence de la force ou des forces Fᵢ appliquées de façon permanente conformément à l'invention. Sur cette figure, sont représentées uniquement les composantes F_{iY} des forces appliquées Fᵢ , lesdites composantes étant à la fois horizontales et perpendiculaires à l'axe de la conduite, c'est-à-dire parallèles à l'axe Y du repère XYZ. Les composantes selon les axes X et Z de chaque force appliquée ne sont pas représentées, car elles n'ont pas une fonction essentielle pour la mise en oeuvre de l'invention. Cependant, ces composantes peuvent ne pas être nulles.
- Selon le 1er mode, une seule force horizontale F_{1Y} est appliquée et détermine le flambement en mode 1, avec une seule boucle latérale.
- Selon le 2^{nd} mode, deux composantes F_{21Y} et F_{22Y}, orientées dans des sens opposés, sont appliquées de façon décalée le long de la section de conduite, avec un décalage constant L₂, et déterminent le flambement en mode 2, avec des boucles alternées équilibrées de part et d'autre de l'axe central de la conduite non flambée. Selon un mode avantageux de réalisation, l'écart relatif entre les intensités des composantes F_{21Y} et F_{22Y} est inférieur à 30%, préférablement inférieur à 20%, préférablement inférieur à 10%. Selon un mode de réalisation particulièrement avantageux, les composantes F_{21Y} et F_{22Y} ont sensiblement la même intensité.
- Selon le 3^{e} mode, trois composantes alternativement opposées F_{32Y}, F_{31Y} et F_{33Y}, sont appliquées avec des décalages L₃ et L₄ constants et avantageusement sensiblement égaux, et déterminent le flambement en mode 3, avec des boucles alternées inégales de part et d'autre de l'axe central de la conduite non flambée. Selon un mode de réalisation avantageux, les intensités des composantes F_{32Y} et F_{33Y} sont sensiblement égales à la moitié de l'intensité de la composante F_{31Y}.

Bien qu'en théorie, des variantes à plus de trois forces puissent être imaginées, elles ne présentent pas d'intérêt pratique en raison de la complexité des dispositifs associés. De plus, du point de vue du dimensionnement de la conduite, le mode le plus favorable est le 2^{e} mode : en effet, à niveau égal de contrainte maximum admissible au niveau du flambement (par exemple 90% de la limite élastique), c'est celui qui permet de libérer les plus fortes contraintes axiales de compression ; d'autre part, il présente aussi la meilleure stabilité latérale (au cours des cycles flambement/retour) de fait de l'application de 2 forces de sens opposés.

L'intensité des forces F_{iY} à appliquer pour initier et contrôler le flambement est beaucoup plus faible que l'intensité des forces de compression axiale qui sont libérées lors du flambement. Ceci constitue une caractéristique particulièrement avantageuse de l'invention car elle permet en pratique d'utiliser des forces F_{iY} d'intensité relativement faible, pouvant par conséquent être générées par des dispositifs simples et économiques.

L'intensité de la force F_{iY} horizontale et perpendiculaire à l'axe de la conduite de chaque force Fᵢ appliquée est comprise entre 100 et 10000 daN, avantageusement 300 et 7000 daN.

Dans le cas des modes 2 ou 3, les distances Lᵢ séparant les points d'application des forces sont avantageusement comprises entre 30 et 200 m. Elles sont calculées au cas par cas, lors de la conception, en fonction de la structure de la conduite, de façon à s'assurer de l'acceptabilité et de l'efficacité du flambement.

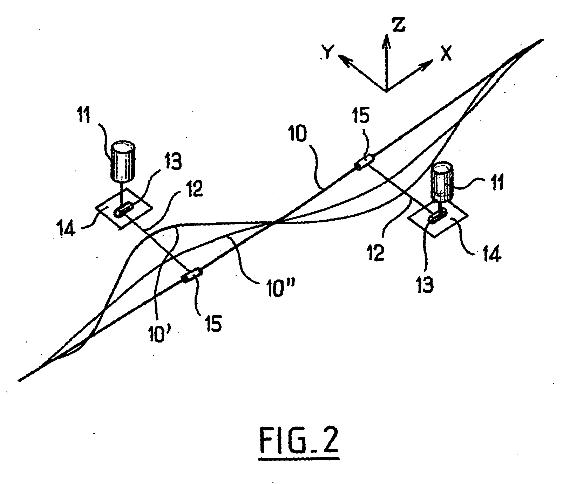

L'invention peut être mise en oeuvre de façon simple et fiable à l'aide d'un dispositif tel que celui qui va être décrit en liaison avec la figure 2, dans le cas particulier du deuxième mode de flambement. Chaque force sensiblement horizontale et perpendiculaire à l'axe de la conduite est générée par une bouée 11 totalement immergée, reliée à la section de conduite 10 par un câble ou une chaîne 12 via un renvoi d'angle 13 ancré par un dispositif d'ancrage 14 au sol, le renvoi d'angle étant du type déflecteur (figure 2) ou poulie.

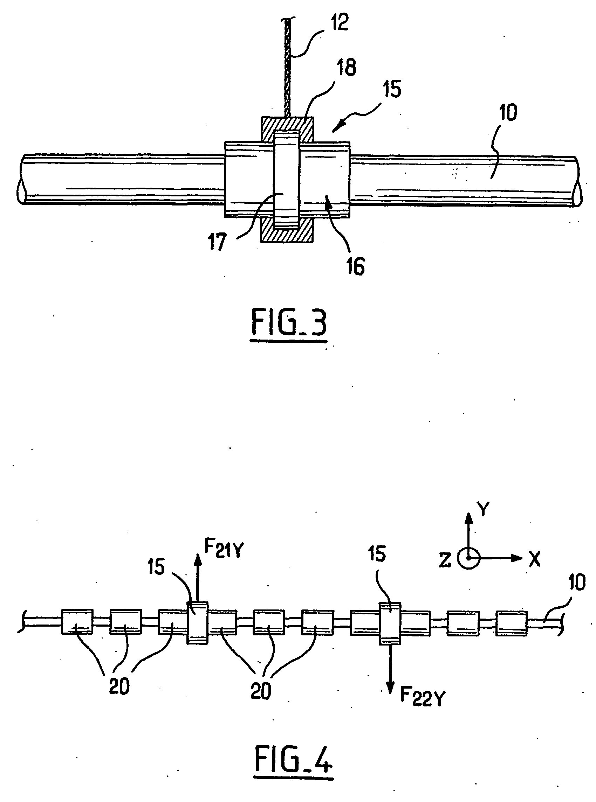

La liaison entre la conduite 10 et la chaîne 12 peut être faite via un collier de serrage (« clamp ») 15. Celui-ci est avantageusement en deux parties serrées autour de la conduite 10 et installé sur le navire dé pose. Pour faciliter l'installation, on peut prévoir un degré de liberté en rotation autour de l'axe de la conduite entre le collier 15 d'une part et le point d'attache de la chaîne ou câble 12 d'autre part. Par exemple, comme montré sur la figure 3, le collier peut comprendre une partie fixe 16 directement serrée sur la conduite, sous forme de manchon définissant une nervure périphérique 17 et une partie mobile en rotation sous forme d'une bride 18 venant coiffer la nervure 17. Le manchon 17 et la bride 18 peuvent être eux-mêmes en deux parties pour faciliter leur montage sur la conduite 10.

La bouée 11 est relativement compacte (de l'ordre de 1 à 2 m de coté) du fait des faibles forces à produire.

La figure 2 montre la conduite 10 rectiligne, à l'installation avant flambement, sur une section de laquelle les dispositifs 11-15 appliquent des forces sensiblement horizontales égales et opposées, en des points de la section éloignés d'environ 60 m . Sous l'action du chauffage et de la pressurisation de la conduite 10, celle-ci flambe de manière privilégiée dans la section équipée, selon le mode 2, et prend la position 10', avec deux boucles marquées (le déport latéral maximum peut être de l'ordre d'une dizaine de mètres). Après refroidissement et dépressurisation, la conduite retourne dans une position intermédiaire 10" entre la position initiale 10 et la position de flambement 10', cette position intermédiaire traduisant notamment l'influence du frottement entre la conduite et le sol.

Il peut être avantageux de combiner la présente invention avec l'une des solutions antérieures visant à réduire la friction latérale entre la conduite et le sol. En effet, le fait de réduire la friction latérale facilite l'initiation du flambement : on peut réduire les forces horizontales « F_{iY} » ; à efficacité égale, on génère moins de contraintes, et on réduit le phénomène d'hystérésis des positions de flambement : si on supprimait totalement la friction latérale, la conduite aurait tendance à toujours revenir à la même position initiale (rectiligne par exemple) entre deux cycles de flambement successifs.

En pratique, on envisage plusieurs variantes de combinaison :

Selon la combinaison illustrée sur la figure 4, dans la zone de flambement, la conduite est supportée par des bouées fixes 20 installées lors de la pose. Ces bouées réduisent le poids apparent de la conduite 10, et peuvent même, en fonction de la conception retenue, faire décoller localement la conduite 10 du fond marin. Le ou les colliers 15 servant à fixer la ou les chaînes sont intercalés entre les bouées 20, ou bien fixés directement sur des bouées prévues à cet effet, qui peuvent avoir sensiblement la forme des manchons 16 de la figure 3.

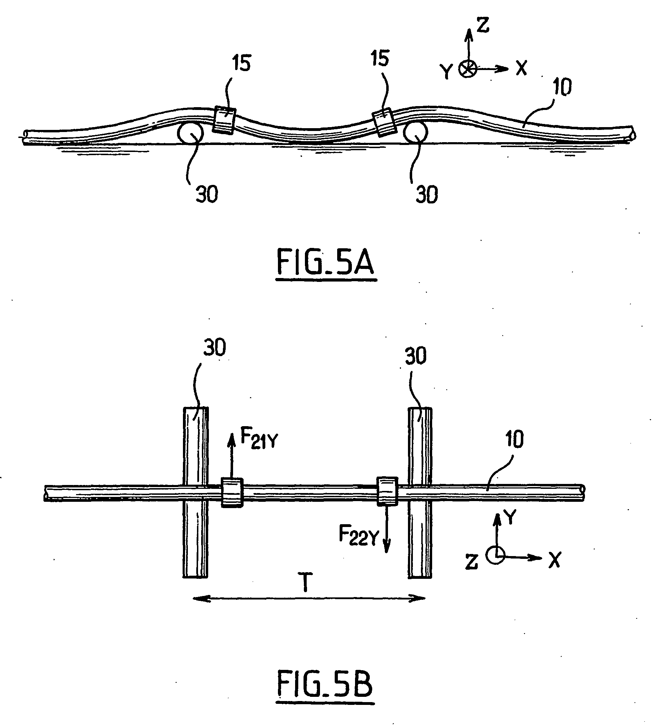

Selon une autre combinaison illustrée sur les figures 5A et 5B, on installe dans la zone de flambement une ou plusieurs travées de glissement 30, transversalement à la conduite 10, destinées à faciliter son glissement latéral lors du flambement. L'espacement T entre les travées peut être de quelques dizaines de mètres, et la longueur de chaque travée peut aussi être de quelques dizaines de mètres. Chaque travée peut être réalisée de manière connue en soi par un tuyau disposé transversalement sous la conduite 10.

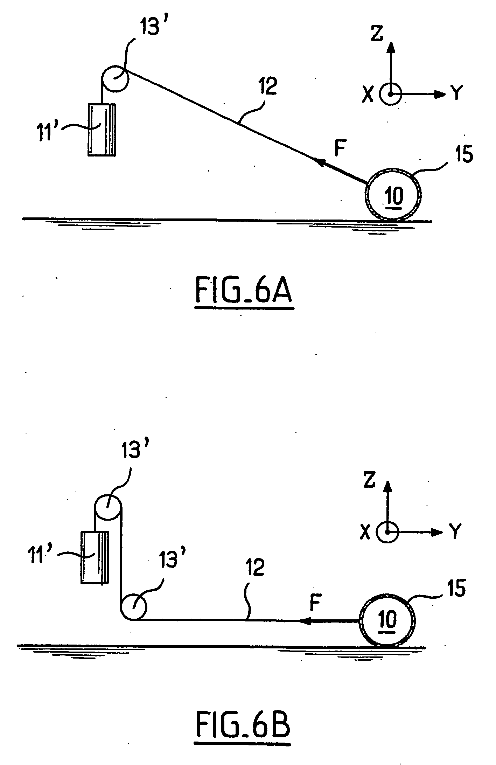

Selon la figure 2, la force appliquée est créée par un système de bouée 11 mais il va de soi qu'on peut utiliser n'importe quel autre type de dispositif. Par exemple, sur les figures 6A et 6B, on a représenté l'application d'une force F par l'intermédiaire d'un câble ou chaîne 12 dont une extrémité est attachée à un collier 15 de serrage de la conduite 10 et dont l'autre extrémité est mise en tension permanente par une masse 11' de densité supérieure à celle de l'eau, une ou plusieurs poulies 13' autorisant les renvois nécessaires.

La configuration illustrée sur la figure 6A permet de combiner de façon simple et économique l'application d'une force F_{Y} horizontale et perpendiculaire à la conduite 10, destinée à initier et contrôler le flambement latéral, avec une force Fz verticale ayant pour effet de réduire localement le poids apparent de la conduite, et donc de la friction latérale avec le sol.

On pourrait avoir un actionneur utilisant un vérin pneumatique, hydraulique ou électrique, ou bien un treuil motorisé, ou encore un ressort de traction ou de compression.

Un dispositif selon la présente invention permet en pratique de libérer et de contrôler efficacement les contraintes axiales de compression sur un tronçon de conduite de longueur pouvant atteindre 1 à 4 km, cette longueur dépendant principalement des caractéristiques de la conduite et du fond marin, de la température et de la pression du fluide transporté, et de la pression hydrostatique.

Dans le cas d'une conduite de plus grande longueur, par exemple de l'ordre de la dizaine de kilomètres, il est nécessaire de prévoir plusieurs dispositifs conformes à la présente invention, et des les répartir le long de la conduite à intervalle moyen variant entre 500 m et 4 km. Plus les contraintes axiales de compression peuvent atteindre un niveau élevé (conduite véhiculant un fluide à haute température par exemple), plus cet intervalle doit être raccourci pour libérer efficacement lesdites contraintes tout en évitant de générer des flambements inacceptables et non contrôlables.

## Revendications

1. Installation sous-marine comprenant une conduite rigide sous-marine de transport de fluide installée sur un fond marin, et au moins un dispositif (11-15) d'application d'une force déterminée sur un point de ladite conduite, ladite force ayant une composante horizontale perpendiculaire à l'axe de ladite conduite au niveau dudit point d'application de ladite force, **caractérisé en ce que** la conduite comporte une section de conduite (10) au sein de laquelle on souhaite réguler le flambement latéral et **en ce que** ladite force est appliquée de manière permanente sur un point de cette section de conduite (10), la force déterminée étant déterminée pour privilégier le flambement latéral de ladite section de conduite (10) sous l'action conjuguée de la température et de la pression au niveau dudit point d'application de ladite force.

2. Installation selon la revendication 1, **caractérisé en ce que** la force appliquée est sensiblement perpendiculaire à l'axe de ladite conduite.

3. Installation selon l'une quelconque des revendications 1 ou 2, **caractérisé en ce que** la force appliquée est sensiblement horizontale.

4. Installation selon l'une quelconque des revendications 1 à 3, **caractérisé en ce qu'**il comprend deux dispositifs (11-15) d'application de force disposés à une distance déterminée l'un de l'autre le long de la section de conduite (10), à savoir un premier dispositif d'application d'une première force ayant une première composante horizontale perpendiculaire à l'axe de ladite conduite au niveau dudit point d'application de ladite première force, et un deuxième dispositif d'application d'une deuxième force ayant une deuxième composante horizontale perpendiculaire à l'axe de ladite conduite au niveau dudit point d'application de ladite deuxième force, lesdites première et deuxièmes composantes étant sensiblement parallèles et de sens opposé.

5. Installation selon la revendication 4, **caractérisé en ce que** la première et la seconde composante ont des intensités sensiblement égales.

6. Installation selon l'une quelconque des revendications 4 ou 5, **caractérisé en ce que** la distance déterminée est comprise entre 30 et 200 m.

7. Installation selon l'une quelconque des revendications 1 à 6, **caractérisé en ce que** l'intensité de la composante horizontale perpendiculaire à l'axe de la conduite de chaque force appliquée est comprise entre 300 et 7000 daN.

8. Installation selon l'une quelconque des revendications 1 à 7, **caractérisé en ce que** le dispositif (11-15) d'application de force comporte un collier (15) entourant la conduite (10) pour fixer une extrémité d'un élément linéaire de traction latérale (12).

9. Installation selon la revendication 8, **caractérisé en ce que** le collier (15) est monté libre en rotation sur la conduite (10).

10. Installation selon l'une quelconque des revendications 8 ou 9, **caractérisé en ce que** l'autre extrémité de l'élément linéaire de traction latérale (12) est liée à un actionneur de type bouée (11), masse (11') ou treuil motorisé.

11. Installation selon la revendication 10, **caractérisé en ce que** l'élément linéaire (12) passe sur au moins un élément de renvoi, de type poulie (13') ou déflecteur (13).

12. Installation selon l'une quelconque des revendications 1 à 7, **caractérisé en ce que** le dispositif d'application de force comprend un actionneur de type vérin ou ressort.

13. Installation selon l'une quelconque des revendications 1 à 12, **caractérisé en ce qu'**il comprend dans la section des bouées fixes (20) d'allègement de la conduite.

14. Installation selon l'une quelconque des revendications 1 à 13, **caractérisé en ce qu'**il comprend dans la section au moins une travée (30) de glissement latéral de la conduite (10).

15. Procédé pour réguler le flambement latéral d'une section de conduite rigide sous-marine de transport de fluide installée sur un fond marin, comprenant l'application d'une force déterminée sur au moins un point d'une conduite, **caractérisé en ce que** la conduite comporte une section de conduite (10) au sein de laquelle on souhaite réguler le flambement latéral et **en ce que** ladite force est appliquée de manière permanente sur un point de cette section de conduite (10), la force déterminée étant déterminée pour privilégier le flambement latéral de ladite section de conduite (10) sous l'action conjuguée de la température et de la pression au niveau dudit point d'application de ladite force.

## Patentansprüche

1. Unterwasseranlage, umfassend eine starre Unterwasser-Rohrleitung zum Transport von Fluid, die auf einem Meeresboden installiert ist, und mindestens eine Vorrichtung (11-15) zum Aufbringen einer festgelegten Kraft auf einem Punkt der Rohrleitung, wobei die Kraft eine horizontale Komponente hat, die zu der Achse der Rohrleitung im Bereich des Aufbringungspunktes dieser Kraft lotrecht ist, **dadurch gekennzeichnet, dass** die Rohrleitung einen Rohrleitungsabschnitt (10) aufweist, in dem das seitliche Einknicken reguliert werden soll, und dass die Kraft permanent auf einem Punkt dieses Rohrleitungsabschnitts (10) aufgebracht wird, wobei die festgelegte Kraft festgelegt wird, um das seitliche Einknicken des Rohrleitungsabschnitts (10) unter der vereinten Wirkung der Temperatur und des Drucks im Bereich des Aufbringungspunktes dieser Kraft zu begünstigen.

2. Anlage nach Anspruch 1, **dadurch gekennzeichnet, dass** die aufgebrachte Kraft zu der Achse der Rohrleitung im Wesentlichen lotrecht ist.

3. Anlage nach einem der Ansprüche 1 oder 2, **dadurch gekennzeichnet, dass** die aufgebrachte Kraft im Wesentlichen horizontal ist.

4. Anlage nach einem der Ansprüche 1 bis 3, **dadurch gekennzeichnet, dass** sie zwei Vorrichtungen (11-15) zum Aufbringen von Kraft umfasst, die in einem festgelegten Abstand voneinander entlang des Rohrleitungsabschnitts (10) angeordnet sind, das heißt, eine erste Vorrichtung zum Aufbringen einer ersten Kraft, die eine erste horizontale Komponente hat, die zu der Achse der Rohrleitung im Bereich des Aufbringungspunktes der ersten Kraft lotrecht ist, und eine zweite Vorrichtung zum Aufbringen einer zweiten Kraft, die eine zweite horizontale Komponente hat, die zu der Achse der Rohrleitung im Bereich des Aufbringungspunktes der zweiten Kraft lotrecht ist, wobei die erste und die zweite Komponente im Wesentlichen parallel und entgegengerichtet sind.

5. Anlage nach Anspruch 4, **dadurch gekennzeichnet, dass** die erste und die zweite Komponente im Wesentlichen gleich große Stärken haben.

6. Anlage nach einem der Ansprüche 4 oder 5, **dadurch gekennzeichnet, dass** der festgelegte Abstand zwischen 30 und 200 m beträgt.

7. Anlage nach einem der Ansprüche 1 bis 6, **dadurch gekennzeichnet, dass** die Stärke der horizontalen, zu der Achse der Rohrleitung lotrechten Komponente jeder aufgebrachten Kraft zwischen 300 und 7.000 daN beträgt.

8. Anlage nach einem der Ansprüche 1 bis 7, **dadurch gekennzeichnet, dass** die Vorrichtung (11-15) zum Aufbringen von Kraft einen Bund (15) aufweist, der die Rohrleitung (10) umgibt, um ein Ende eines linearen Seitentraktionselements (12) zu befestigen.

9. Anlage nach Anspruch 8, **dadurch gekennzeichnet, dass** der Bund (15) an der Rohrleitung (10) frei drehbar gelagert ist.

10. Anlage nach einem der Ansprüche 8 oder 9, **dadurch gekennzeichnet, dass** das andere Ende des linearen Seitentraktionselements (12) mit einem Stellorgan des Typs Boje (11), Masse oder motorbetriebene Winde verbunden ist.

11. Anlage nach Anspruch 10, **dadurch gekennzeichnet, dass** das lineare Element (12) auf mindestens einem Umlenkelement, des Typs Seilrolle (13') oder Leitelement (13), verläuft.

12. Anlage nach einem der Ansprüche 1 bis 7, **dadurch gekennzeichnet, dass** die Vorrichtung zum Aufbringen von Kraft ein Stellorgan des Typs Zylinder oder Feder umfasst.

13. Anlage nach einem der Ansprüche 1 bis 12, **dadurch gekennzeichnet, dass** sie in dem Abschnitt ortsfeste Bojen (20) zur Gewichtsverringerung der Rohrleitung umfasst.

14. Anlage nach einem der Ansprüche 1 bis 13, **dadurch gekennzeichnet, dass** sie in dem Abschnitt mindestens eine Öffnung (30) zum seitlichen Gleiten der Rohrleitung (10) umfasst.

15. Verfahren zum Regulieren des seitlichen Einknickens eines Abschnitts einer starren Unterwasser-Rohrleitung zum Transport von Fluid, die auf einem Meeresboden installiert ist, welches das Aufbringen einer festgelegten Kraft auf mindestens einem Punkt einer Rohrleitung umfasst, **dadurch gekennzeichnet, dass** die Rohrleitung einen Rohrleitungsabschnitt (10) aufweist, in dem das seitliche Einknicken reguliert werden soll, und dass die Kraft permanent auf einem Punkt dieses Rohrleitungsabschnitts (10) aufgebracht wird, wobei die festgelegte Kraft festgelegt wird, um das seitliche Einknicken des Rohrleitungsabschnitts (10) unter der vereinten Wirkung der Temperatur und des Drucks im Bereich des Aufbringungspunktes dieser Kraft zu begünstigen.

## Claims

1. A sub-sea installation comprising an underwater fluid-carrying rigid pipe installed on a sea-bed, and at least one device (11-15) intended for the permanent application of a given force to a point of said pipe, said force having a horizontal component perpendicular to the axis of said pipe at the position of said application point of said force, **characterized in that** the pipe includes a pipe section (10) within which it is intended to regulate the lateral buckling and **in that** said force is permanently applied to a point of this pipe section (10), the given force being determined to promote the lateral buckling of said pipe section (10) under the combined action of the temperature and the pressure at the position of said application point of said force.

2. The installation according to claim 1, **characterized in that** the applied force is substantially perpendicular to the axis of said pipe.

3. The installation according to any one of claims 1 or 2, **characterized in that** the applied force is substantially horizontal.

4. The installation according to any one of claims 1 to 3, **characterized in that** it comprises two devices (11-15) for applying a force, positioned at a given distance from each other along the pipe section (10), namely a first device for application of a first force having a first horizontal component perpendicular to the axis of said pipe at the position of said application point of said first force, and a second device for application of a second force having a second horizontal component perpendicular to the axis of said pipe at the position of said application point of said second force, said first and second components being substantially parallel and applied in opposite directions.

5. The installation according to claim 4, **characterized in that** the first and the second component have substantially equal intensities.

6. The installation according to any one of claims 4 or 5, **characterized in that** the given distance ranges between 30 and 200 m.

7. The installation according to any one of claims 1 to 6, **characterized in that** the intensity of the horizontal component perpendicular to the axis of the pipe of each applied force ranges between 300 and 7000 daN.

8. The installation according to any one of claims 1 to 7, **characterized in that** the device (11-15) for applying a force includes a collar (15) surrounding the pipe (10) to fix one end of a linear lateral traction member (12).

9. The installation according to claim 8, **characterized in that** the collar (15) is mounted for freely rotation on the pipe (10).

10. The installation according to any one of claims 8 or 9, **characterized in that** the other end of the linear lateral traction member (12) is connected to an actuator of the buoy (11), the mass (11') or the power winch type.

11. The installation according to claim 10, **characterized in that** the linear member (12) goes over at least one return member of the pulley (13 ') or the deflector (13) type.

12. The installation according to any one of claims 1 to 7, **characterized in that** the device for applying a force comprises an actuator of the jack or the spring type.

13. The installation according to any one of claims 1 to 12, **characterized in that** it comprises, within the section, fixed buoys (20) for lightening the pipe.

14. The installation according to any one of claims 13 , **characterized in that** it comprises, within the section, at least a span (30) for lateral sliding of the pipe (10).

15. A method for regulating the lateral buckling of a section of underwater fluid-carrying rigid pipe installed on a sea-bed, comprising the application of a given force on at least a point of a pipe, **characterized in that** the pipe includes a pipe section (10) within which it is intended to regulate the lateral buckling and **in that** said force is permanently applied to a point of this pipe section (10), the given force being determined to promote the lateral buckling of said pipe section (10) under the combined action of the temperature and the pressure at the position of said application point of said force.
